(19) Europäisches Patentamt
European Patent Office
Office européen des brevets

(11) EP 0 637 598 B1

(12) EUROPEAN PATENT SPECIFICATION

(45) Date of publication and mention of the grant of the patent:
**02.05.1997 Bulletin 1997/18**

(51) Int Cl.6: **C08F 226/04**, C08F 2/28

(21) Application number: **94108939.3**

(22) Date of filing: **10.06.1994**

# (54) Hydrophobic dispersants used in forming polymer dispersions

Hydrophobe Dispergiermitteln verwendet in der Herstellung von Polymer-Dispersionen

Dispersants hydrophobes utilisés dans la préparation de dispersions de polymères

(84) Designated Contracting States:
**DE ES FR GB IT**

(30) Priority: **10.06.1993 US 74960**

(43) Date of publication of application:
**08.02.1995 Bulletin 1995/06**

(73) Proprietor: **NALCO CHEMICAL COMPANY**
**Naperville Illinois 60563-1198 (US)**

(72) Inventors:
- **Ramesh, Marian**
  **Naperville, Illinois 60565 (US)**
- **Cramm, Jeffrey R.**
  **Winfield, Illinois 60190 (US)**

(74) Representative: **Hartmann, Günter et al**
**RUSCHKE HARTMANN BECKER,**
**Patentanwälte,**
**Pienzenauerstrasse 2**
**81679 München (DE)**

(56) References cited:
**DE-A- 2 951 798** **GB-A- 2 013 221**
**US-A- 3 714 256**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 637 598 B1

## Description

The present invention relates to a process for preparing a dispersion of a water-soluble polymer which is widely used as, e.g. flocculating agents for waste water treatment, dehydrating agents, chemicals used in papermaking processes, dispersion dispersants for various suspensions, soil improvers, etc. and for preparing dispersions of cationic vinyl addition polymers in an aqueous salt solution.

## BACKGROUND OF THE INVENTION

Conventional processes for the preparation of a water soluble cationic polymer which is useful as a flocculant for waste water disposal or as a papermaking chemical include standing polymerization in an aqueous solution, water-in-oil emulsion polymerization, and suspension polymerization in a hydrophobic solvent.

Others have prepared a water soluble, nonionic or anionic polymer by precipitation polymerization in an aqueous solution of ammonium sulfate. Still others have carried out the polymerization in an aqueous solution of salt in the presence of a polyhydric alcohol or a polyelectrolyte as a dispersant.

US-A-4 929 655 discloses a process for preparing a water soluble polymer dispersion which overcomes the many disadvantages of the stationary polymerization, water-in-oil type emulsion polymerization and suspension polymerization processes. This process for the production of a water soluble polymer dispersion includes the polymerization of water soluble monomers of 5 to 100 mole % of a cationic monomer represented by the following formula (I), 0 to 50 mole % of another cationic monomer represented by the following formula (II) and 0 to 95 mole % of (meth)acrylamide in the presence of 1 to 10% by weight of an organic high molecular multivalent cation comprising a water soluble polymer containing at least a monomer of formula (II) (i.e., a hydrophilic monomer), based on the total weight of the monomers, in an aqueous multivalent anionic salt solution having a concentration of 15% by weight or more:

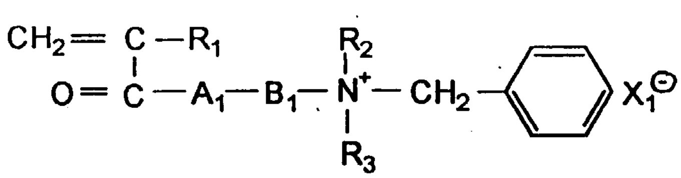

(I)

where $R_1$ is either hydrogen or $CH_3$; $R_2$ and $R_3$ are each an alkyl group having 1 to 3 carbon atoms; $A_1$ is either an oxygen atom or NH; $B_1$ is either an alkylene group having 2 to 4 carbon atoms or a hydroxypropylene group, and $X_1^{\ominus}$ is an anionic counterion, and optionally a second cationic monomer represented by the following general formula (II):

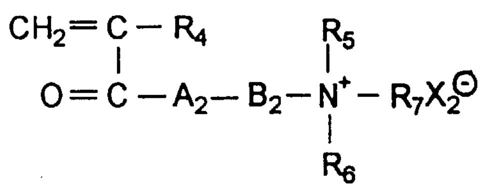

(II)

where $R_4$ is either hydrogen or $CH_3$; $R_5$ and $R_6$ are each an alkyl group having 1 to 2 carbon atoms; $R_7$ is a hydrogen atom or an alkyl group having 1 to 2 carbon atoms; $A_2$ is either an oxygen atom or NH; $B_2$ is either an alkylene group having 2 to 4 carbon atoms or a hydroxypropylene group and $X_2^{\ominus}$ is an anionic counterion.

US-A-5 006 590 provides for a dual dispersant system wherein polymerization is carried out in the presence of: (1) a water soluble cationic polymer which is insoluble in an aqueous solution of a polyvalent anion salt; and (2) a water soluble cationic polymer which is soluble in an aqueous solution of a polyvalent anion salt. The water soluble cationic polymer that is insoluble in the aqueous solution of polyvalent anion salt contains at least 5 mole % of cationic monomer units represented by the aforementioned general formula (I) above and the water soluble cationic polymer that is soluble in the aqueous solution of a polyvalent anion salt contains at least 20 mole % of cationic monomer units represent by the general formula (II) above.

Although the final polymer dispersion viscosities were satisfactory, i.e. 1,000 mPa.s (cps) or below, the processes disclosed in US-A-4 929 655 and 5 006 590 proceed through very high process viscosities (i.e., >100,000 mPa.S (cps), which require the use of a custom built high viscosity polymerization reactor. Due to these high process viscosities, the methods disclosed in US-A-4,929,655 and 5,006,590 can only be used in the synthesis of polymer systems containing low polymer contents (i.e., 15 to 20%).

That is, in the precipitation processes discussed above, the polymer (acrylamide (AcAm)/dimethylaminoethylacrylate benzyl chloride quaternary (DMAEA.BCQ)/dimethylaminoethylacrylate methyl chloride quaternary (DMAEA.MCQ)) particle is adsorbed or grafted by dispersants such as poly(DMAEA.MCQ) and colloidal stabilization is attained. During this process the hydrodynamic volume of the particle, consisting of water, salt, monomers, macro radical, and dispersant, is significantly increased. This increase is presumably due to the hydrophilic nature of Poly(DMAEA.MCQ) which is highly extended in the polymerization medium. The increase in hydrodynamic volume results in a relative increase in the bulk viscosity.

DE-A-2 951 798 refers to water-insoluble graft copolymer particles used as fillers for papermaking. Such water-insoluble graft copolymer particles are prepared by graft copolymerization of at least one specific ethylenically unsaturated monomer and a water soluble cationic prepolymer in the presence of a free radical initiator. The object underlying the invention described therein is to provide organic pigments which can be used as fillers for light paper in order to make it non-opaque, glossy and smooth without deteriorating its strength.

The present inventors believe that if the dispersant has a certain degree of hydrophobicity, the polymer particle's hydrodynamic volume will be constrained. That is, if the continuous phase is water and the hydrophobic moieties prefer to be away from water and tend to associate, then a contraction in the particle hydrodynamic volume will occur. This reduction will, in turn, reduce the bulk viscosity.

The present inventors have discovered through extensive experimentation, that hydrophobically modified diallyldimethylammonium chloride (DADMAC) polymers can be used as colloidal dispersants in the polymer dispersion precipitation process. This hydrophobic system is at least partially soluble in water as well as in aqueous salt solutions. The hydrophobicity associated with these polymers has been demonstrated to facilitate the precipitation process, presumably reduce the hydrodynamic volume of the resulting particle and thereby very significantly reduce the process viscosity. This allows the production of high molecular weight polymer dispersions in a conventional latex-type reactor, thereby avoiding the substantial costs associated with high viscosity custom built polymerization reactors. Further, the reduction in process viscosity will allow the preparation of polymer systems containing higher actives in reactors that could accommodate high process viscosities.

The present inventors have also determined the effect of salt concentration, stabilizer concentration, initiator concentration, shear, temperature and co-stabilizer concentration on the process viscosity. They have also developed optimum process conditions and demonstrated in Figs. 1-4, attached hereto, the extreme sensitivity of these parameters on the process viscosity.

That is, in dispersion processes, monomers are soluble in the polymerization medium and present in a homogenous state. The resulting polymer of this process is insoluble in the polymerization medium and introduces the heterogeneous state. As a result of this feature, dispersion processes proceed through a nucleation stage wherein colloidal particles are formed. These colloidal particles grow and reach a critical radius and then phase separate. These particles are typically stabilized by steric stabilizers. The nature of a stabilizer determines its extension into the polymerization medium. Dispersion viscosity ($\eta$) is generally explained as a function of the volume fraction ($\Phi$) and the viscosity of the medium, $\eta_o$. The volume fraction of a particle is governed by the nature of the stabilizer and is derived by the following equation:

$$\Phi^1 = \Phi(1 + d/a)^3$$

where a is the radius of the particle, d is the molecular extension of the particle/stabilizer system, $\Phi$ is the core-particle volume fraction and $\Phi^1$ is the effective volume fraction.

In Einstein, A. Investigations on the Theory of the Brownian Motion, Dover, New York, 1956, an equation was put forth which related the volume fraction of a particle to the dispersion viscosity, i.e.,

$$\eta = \eta_o(1 + [\eta]\Phi + k_2\Phi + 0[\Phi^3])$$

where $\eta$ is the viscosity of the dispersion, $\eta_o$ is the viscosity of the polymerization medium, $[\eta]$ is intrinsic viscosity (determined by Einstein, to be 2.5 for uncharged particles) and $k_2$ is a coefficient for interaction between two colliding particles (i.e., 6.2).

The Einstein equation can also be written as follows:

$$\eta = \eta_o(1 + [\eta]\Phi)$$

and a small increase in viscosity due to a small increment in volume fraction can be expressed as,

$$d\eta = \eta_o[\eta]d\Phi$$

and for an infinitesimal increment to the viscosity $\eta$,

$$d_\eta = \eta[\eta]d\Phi$$

The contribution of particles to the free volume is given by,

$$\frac{d\Phi}{(1 - \Phi / \Phi_m)}$$

where $\Phi_m$ is the maximum packing fraction. The following equation found in Krieger, I.M. Adv. Coll and Interface Sci., 1972, 3, 111, provides the final effect and is given below:

$$\eta = \eta_o[1 - \Phi / \Phi_m] - [\eta]\Phi_m$$

Thus, any difference in the extension of the stabilizer into the polymerization medium will significantly influence the dispersion viscosity. The stabilizer disclosed in US-A-5,006,590 and 4,929,655 uses a hydrophilic stabilizer viz., polymers based on acrylamide and dimethylaminoethylacrylate methyl chloride quaternary. Due to their hydrophilic nature these systems extend farther into the dispersion medium.

The hydrophobic stabilizer of the present invention reduces such an extension due to the associating properties of hydrophobic moieties. This reduction, as shown in the above equations, subsequently reduces the process viscosity. This reduced particle size is related to the reduction in hydrodynamic volume by the Stokes-Einstein equation:

$$D = kT / 6\pi r\eta$$

The present invention also provides many additional advantages which shall become apparent as described below.

## SUMMARY OF THE INVENTION

The object of the present invention is to provide a process for preparing a water-soluble dispersion which allows the preparation of polymer systems containing higher actives in reactors that could accommodate high process viscosities.

This object can be achieved by using a hydrophobically associating dispersant in forming polymer dispersions which comprises a copolymer of diallyldimethylammonium chloride (DADMAC) and a hydrophobic monomer selected from the group consisting of $C_6$-$C_{20}$ N-substituted quaternary dialkylaminoalkylacrylates (DMAEA), $C_6$-$C_{20}$ N-substituted quaternary dialkylaminoalkylmethacrylates (DMAEM), $C_6$-$C_{20}$ N-substituted quaternary dialkylamino-alkyl(meth) acrylamides, and alkyl esters of acrylic acid. This hydrophobically associating dispersant used according to the present invention is particularly useful in preparing water-soluble polymer dispersions.

Subject-matter of the present invention is a process for preparing a water-soluble polymer dispersion which comprises polymerizing a water-soluble mixture comprising

(a) a cationic monomer represented by general formula (I):

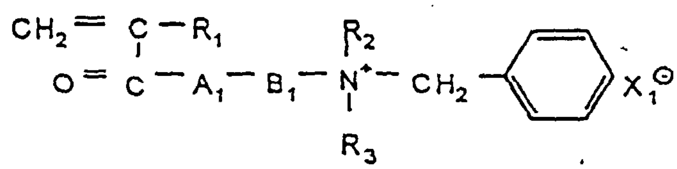

(I)

where $R_1$ is either hydrogen or $CH_3$; $R_2$ and $R_3$ are each an alkyl group having 1 to 3 carbon atoms; $A_1$ is either an oxygen atom or NH; $B_1$ is either an alkylene group having 2 to 4 carbon atoms or a hydroxypropylene group, and $X_1^{\ominus}$ is an anionic counterion, and optionally

(b) a second cationic monomer represented by general formula (II):

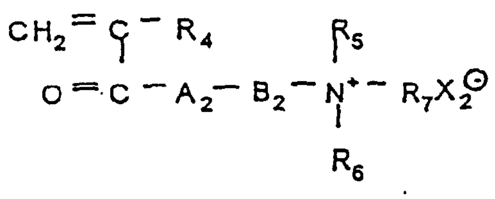

(II)

where $R_4$ is either hydrogen or $CH_3$; $R_5$ and $R_6$ are each an alkyl group having 1 to 2 carbon atoms; $R_7$ is a hydrogen atom or an alkyl group having 1 to 2 carbon atoms; $A_2$ is either an oxygen atom or NH; $B_2$ is either an alkylene group having 2 to 4 carbon atoms or a hydroxypropylene group, and $X_2^{\ominus}$ is an anionic counterion, and

(c) (meth) acrylamide

in an aqueous solution of a polyvalent anion salt, the process comprises:

conducting said polymerization in the presence of a polymerization initiator and a hydrophobically associating dispersant comprising a copolymer of diallyldimethylammonium chloride (DADMAC) and a hydrophobic monomer selected from the group consisting of $C_6$-$C_{20}$ N-substituted quaternary dialkylaminoalkylacrylates (DMAEA), $C_6$-$C_{20}$ N-substituted quaternary dialkylaminoalkylmethacrylates (DMAEM), $C_6$-$C_{20}$ N-substituted quaternary dialkylaminoalkyl(meth)acrylamides, and alkyl esters of acrylic acid, in a molar ratio of diallyldimethylammonium chloride to hydrophobic monomer in the range between 99:1 and 20:80, wherein said cationic monomer represented by formula (I) (monomer (a)) being present in an amount between 5 and 50 mole%, said cationic monomer represented by formula (II) (monomer (b)) optionally being present in an amount between 5 and 50 mole%, said (meth)acrylamide (monomer (c)) being present in an amount in the range between 20 and 95 mole%, and said hydrophobically associating dispersant being present in an amount between 2.5 and 10 weight%, based on the total weight of monomers (a), (b) and (c).

According to preferred embodiments of the process of the present invention the dispersant is a copolymer of diallyldimethylammonium chloride and a monomer selected from the group consisting of dimethylaminoethylacrylate benzyl chloride quaternary and dimethylaminoethylacrylate cetyl chloride quaternary, or a copolymer of diallyldimethylammonium chloride and a monomer selected from the group consisting of dimethylaminoethylmethacrylate benzyl chloride quaternary and dimethylaminoethylmethacrylate cetyl chloride quaternary.

The preferred alkyl ester of acrylic acid used according to the present invention is ethylhexyl acrylate.

The monomers of formula (I) used in the process of the present invention are preferably selected from the group consisting of the benzylchloride quaternaries of dimethylaminoethyl (meth)acrylate, diethylaminoethyl (meth)acrylate, dimethylaminopropyl (meth)acrylamide and dimethylhydroxypropyl (meth)acrylate, diethylaminopropyl (meth)acrylamide and dimethylaminohydroxypropyl (meth) acrylate.

The monomers of formula (II) used in the process of the present invention are preferably selected from the group consisting of the methyl and ethyl quaternary salts of dimethylaminoethyl (meth)acrylate, diethylaminoethyl (meth) acrylate, dimethylaminopropyl (meth)acrylamide, diethylaminopropyl (meth)acrylamide and dimethylhydroxypropyl (meth)acrylate.

The process viscosity during polymerization in the process of the present invention is preferably less than about 5,000 mPa.s (cps).

The process of the present invention is particularly suitable for preparing dispersions of cationic vinyl addition polymers in an aqueous salt solution.

Other and further objects, advantages and features of the present invention will be understood by reference to the following specification in conjunction with the annexed drawings.

## BRIEF DESCRIPTION OF THE DRAWINGS

Fig. 1 is a graph plotting process viscosity versus salt concentration;

Fig. 2 is a graph plotting process viscosity versus co-stabilizer concentration;

Fig. 3 is a graph plotting process viscosity versus stabilizer IV; and

Fig. 4 is a graph plotting process viscosity versus stabilizer hydrophobicity.

## DESCRIPTION OF THE PREFERRED EMBODIMENTS

The hydrophobically associating dispersant used according to the present invention is used to prepare water-soluble polymer dispersions. These dispersants are copolymers of diallyldimethylammoniumchloride (DADMAC) and a hydrophobic monomer selected from the group consisting of:
$C_6$-$C_{20}$ N-substituted quaternary dialkylaminoalkylacrylates (DMAEA), $C_6$-$C_{20}$ N-substituted quaternary dialkylaminoalkylmethacrylates (DMAEM), $C_6$-$C_{20}$ N-substituted quaternary dialkylamino-alkyl(meth)acrylamides, and alkyl esters of acrylic acid.

The DADMAC can be prepared in accordance with any conventional manner such as the technique described in US-A 4 151 202.

The $C_6$-$C_{20}$ N-substituted quaternary dialkylaminoalkylacrylate is preferably selected from the group consisting of: dialkylaminoalkylacrylates having $C_6$ to $C_{20}$ chloride quaternary, e.g., dimethylaminoethylacrylate benzyl chloride quaternary or dimethylaminoethylacrylate cetyl chloride quaternary.

The $C_6$-$C_{20}$ N-substituted quaternary dialkylaminoalkylmethacryle is preferably selected from the group consisting of: dialkylaminoalkylmethacrylates having $C_6$ to $C_{20}$ chloride quaternary, e.g., dimethylaminoethylmethacrylate benzyl chloride quaternary or dimethylaminoethylmethacrylate cetyl chloride quaternary.

The hydrophobic dispersant used according to the present invention has a molar ratio of diallyldimethylammonium chloride to hydrophobic monomer in the range between 99:1 to and 20:80, preferably 90:10.

A semi-batch process is preferably used to make the hydrophobic dispersants and comprises the following steps:

a. adding diallyldimethylammonium chloride to a polymerization reaction vessel in an amount between 1 and 19 weight percent;
b. heating the diallyldimethylammonium chloride to a temperature in the range between 47°C and 57°C;
c. adding a polymer initiator dropwise to the diallyldimethylammonium chloride in an amount between 0.05 and 0.40 weight percent;
d. adding a hydrophobic monomer dropwise to the diallyldimethylammonium chloride in an amount between 3 and 19 weight percent; and
e. heating the mixture of diallyldimethylammonium chloride, polymer initiator and hydrophobic monomer to a temperature in the range between 47°C and 82°C.

Typically, deionized water is added periodically as needed during the polymerization process in a total amount between 63 and 88 weight percent. In some instances it is preferable to mix diallyldimethylammonium chloride with NaCl and deionized water prior to addition to the reaction vessel. The NaCl is added in an amount between 2 and 3.5 weight percent and the deionized water is added in an amount between 1 and 2.5 weight percent. This diallyldimethylammonium chloride solution has a concentration of diallyldimethylammonium chloride in the range between 50 and 65.

This semi-batch process produces a hydrophobic dispersant with a pH in the range from 3.5 to 4.5.

The diallyldimethylammonium chloride, polymerization initiator and hydrophobic monomer are heated at a temperature in the range between 47°C and 57°C for a period of 6 to 8 hours. Thereafter, the temperature of the reaction vessel is increased to 72°C to 82°C for a period of between 5 and 7 hours. After polymerization has been completed the copolymer product is typically diluted with deionized water, cooled and stored.

The polymerization initiator is selected from the group consisting of 2,2'-azobis(2-amidinopropane) hydrochloride (V50), ammonium persulfate, 2,2'-azobis(N,N'-dimethylene isobutyramidine) dihydrochloride (VA044), and ammonium persulfate/sodium meta bisulfite.

The dispersant used according to the present invention is particularly useful in processes for preparing a water soluble polymer dispersion by polymerizing a water soluble mixture of a cationic monomer represented by the following general formula (I):

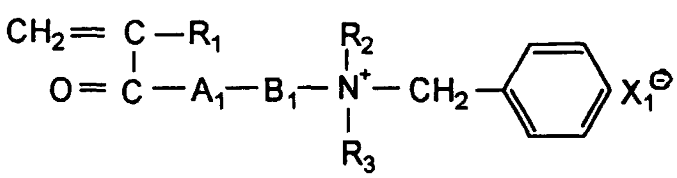

(I)

where $R_1$ is either hydrogen or $CH_3$; $R_2$ and $R_3$ are each an alkyl group having 1 to 3 carbon atoms; $A_1$ is either an oxygen atom or NH; $B_1$ is either an alkylene group having 2 to 4 carbon atoms or a hydroxypropylene group, and $X_1^{\ominus}$ is an anionic counterion, and optionally a second cationic monomer represented by the following general formula (II):

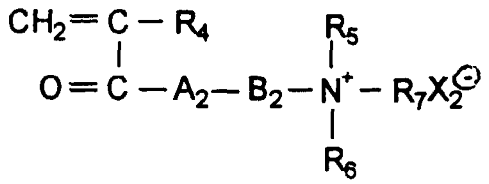

(II)

where $R_4$ is either hydrogen or $CH_3$; $R_5$ and $R_6$ are each an alkyl group having 1 to 2 carbon atoms; $R_7$ is a hydrogen atom or an alkyl group having 1 to 2 carbon atoms; $A_2$ is either an oxygen atom or NH; $B_2$ is either an alkylene group having 2 to 4 carbon atoms or a hydroxypropylene group and $X_2^{\ominus}$ is an anionic counterion, and (meth)acrylamide in an aqueous solution of a polyvalent anion salt; wherein the polymerization is carried out in the presence of a dispersant which comprises a copolymer of diallyldimethylammonium chloride and a hydrophobic monomer as listed above and in the presence of a polymerization initiator.

The (meth)acrylamide is typically present in an amount in the range between 20 and 95 mole %, the cationic monomer represented by the general formula (I) is typically present in an amount between 5 and 50 mole %; and the cationic monomer represented by the general formula (II) is typically present in an amount between 5 and 50 mole %. The use of the cationic monomer represented by the general formula (II) is optional. The dispersant is present in an amount between 2.5 and 10 weight %, based on the total weight of the monomers of the dispersion.

Examples of monomers represented by the general formula (I) include quaternary monomers obtained by treating dimethylaminoethyl (meth)acrylate, diethylaminoethyl (meth)acrylate, dimethylaminopropyl (meth)acrylamide and dimethylhydroxypropyl (meth)acrylate, diethylaminopropyl (meth)acrylamide and dimethylaminohydroxylpropyl (meth) acrylate with benzyl chloride. One preferred monomer is N-benzyl-N-(meth)acryloyloxyethyl-N,N-dimethylammonium chloride.

Examples of monomers represented by the general formula (II) include salts such as dimethylaminoethyl (meth) acrylate, diethylaminoethyl (meth)acrylate, dimethylaminopropyl (meth)acrylamide, diethylaminopropyl (meth)acrylamide and dimethylhydroxypropyl (meth)acrylate, and methylated and ethylated quaternary salts. One preferred monomer is N-(meth)acryloyloxyethyl-N,N,N-trimethyl ammonium chloride.

The multivalent anionic salt used to deposit the polymer in the present invention is a sulfate or a phosphate, and typical examples of these salts include ammonium sulfate, sodium sulfate, magnesium sulfate, aluminum sulfate, ammonium hydrogenphosphate, sodium hydrogenphosphate and potassium hydrogenphosphate. The salt is used in the form an aqueous solution at a salt concentration of 15.75% or more, preferably 16.5% by weight or more.

The dispersant used in this invention is at least partially soluble in both water and the aqueous salt solution.

Utilizing the dispersant permits the use of conventional latex reactors since the process viscosity during polymerization is maintained below about 5,000 mPa·s (cps) more preferably below about 3,000 mPa·s (cps).

The present invention can best be understood by reference to the following working and comparative examples.

## Preparation - EXAMPLE 1

A dispersant was formed from diallyldimethylammonium chloride (DADMAC) and dimethylaminoethylmethacrylate cetyl chloride quaternary (DMAEM.CCQ) monomers using a batch process. The following reagents were used:

| | |
|---|---|
| 251.30 g | 62% Solution of DADMAC |
| 150.00 g | 20% Solution of DMAEM.CCQ |
| 0.30 g | Versene |
| 10.00 g | Adipic Acid |
| 15.00 g | 25% Solution of Ammonium Persulfate |
| 75.08 g | Deionized Water |

DADMAC was added to a mixture of DMAEM.CCQ, adipic acid, versene, and deionized water. This reaction mixture was then heated to about 50°C and thereafter the ammonium persulfate was added. The reaction vessel was purged with nitrogen at 10 ml/min. and stirred at about 250 rpm. After 30 minutes a precipitate began to form so an additional 154.76 g of a 62% solution of DADMAC, 10 g of a 25% solution of ammonium persulfate and 0.10 g of versene were

added to the reaction vessel. Thereafter, the temperature of mixture was increased to 65°C for 6 hours and then cooled to ambient temperature. The final molar ratio of DADMAC to DMAEM.CCQ was 96.68% to 3.32%.

A preparation of DMAEM.CBQ (dimethylaminoethylmethacrylate cetyl bromide quaternary) was effected as follows:

| | |
|---|---|
| 80.00 g | 97% Cetyl Bromide |
| 40.00 g | 99% DMAEM |
| 0.08 g | Hydroquinnone |
| 500.00 g | Ethanol |

The above reactants were combined and heated at reflux for 4 hours. The solvent (i.e., ethanol) was removed under reduced pressure. A gummy liquid upon cooling afforded pale pink colored solid DMAEM.CBQ monomer in 96% yield. This monomer was then dissolved in deionized water to a desired dilution.

The preparation of DMAEM.CCQ was effected by stirring an aqueous solution (25% actives) of DMAEM.CBQ (1,000 g), prepared as above, with Amberlite IRA-400 ($Cl^-$) ion exchange resin for 30 minutes. The resin was filtered and the monomer used in subsequent polymerizations.

**Preparation - EXAMPLE 2**

A dispersant was formed from 70% DADMAC and 30% dimethylaminoethylacrylate benzyl chloride quaternary (DMAEA.BCQ) monomers. The following reagents were used:

| | |
|---|---|
| 188.03 g | 62% Solution of DADMAC |
| 104.28 g | 80% Solution of DMAEA.BCQ |
| 0.20 g | Versene |
| 15.00 g | 25% Solution of Ammonium Persulfate |
| 692.49 g | Deionized Water |

DADMAC and 100 g of deionized water were placed within a polymerization reaction vessel which was purged with nitrogen at 10 ml/min. Thereafter, the ammonium persulfate was added dropwise to the reaction vessel via a syringe pump for 2 hours. Simultaneously, DMAEA.BCQ was added dropwise to the reaction vessel via a syringe pump for 2 hours. The DMAEA.BCQ was diluted with 100 g of deionized water prior to being loaded into the syringe pump. Thereafter, the remaining deionized water and versene were added to the reaction vessel which was then heated at 65°C for 6 hours.

**Preparation - Example 3**

A dispersant was formed from 70% DADMAC and 30% dimethylaminoethylacrylate benzyl chloride quaternary (DMAEA.BCQ) monomers. The following reagents were used:

| | |
|---|---|
| 188.03 g | 62% Solution of DADMAC |
| 104.28 g | 80% Solution of DMAEA.BCQ |
| 0.20 g | Versene |
| 1.17 g | V50 |
| 706.00 g | Deionized Water |
| 0.32 g | $H_2SO_4$ |

DADMAC was placed within a polymerization reaction vessel which was purged with nitrogen at 10 ml/min., stirred at 300 rpm and a torque of $3{,}5 \cdot 10^{-5}$ N·m (350 dynes-cm). The pH was adjusted to 3.5 by addition of $H_2SO_4$. To this was added dropwise V50 and DMAEA.BCQ via separate syringe pumps. The DMAEA.BCQ was diluted with 100 g of deionized water. During the first 40 minutes of addition the torque gradually increased to $2{,}24 \cdot 10^{-4}$ N·m (240 dynes-cm). Thereafter, 100 g of deionized water was pded to the DADMAC which reduced the torque to $8{,}5 \cdot 10^{-5}$ N·m (850 dynes-cm). The reaction vessel was then heated at 65°C for 5 hours. After 2 hours and 20 minutes the torque reached $2{,}9 \cdot 10^{-4}$ N·m (2920 dynes-cm). 100 g of deionized water was again added which reduced the torque to $1{,}18 \cdot 10^{-4}$ N·m (1180 dynes-cm) After 3 hours and 15 minutes another 100 g of deionized water was added to the polymerizing product.

After 5 hours another 100 g of deionized water was added to the reaction vessel and the temperature was raised to 80°C for 1 hour. Thereafter, the resulting polymer was diluted with the remaining deionized water, cooled and stored.

**Preparation - EXAMPLE 4**

A dispersant was formed from 80% DADMAC and 20% dimethylaminoethylmethacrylate cetyl chloride quaternary (DMAEM.CCQ) monomers. The following reagents were used:

| | |
|---|---|
| 188.02 g | 62% Solution of DADMAC |
| 83.43 g | DMAEM.CCQ |
| 0.20 g | Versene |
| 1.17 g | V50 |
| 727.03 g | Deionized Water |
| 0.15 g | $H_2SO_4$ |

DADMAC was placed within a polymerization reaction vessel which was purged with nitrogen at 10 ml/min. and stirred at 300 rpm. The pH was adjusted to 3.5 by addition of $H_2SO_4$. 150 ml of deionized water was added to the DADMAC. This was followed by the dropwise addition of V50 and DMAEA.CCQ via separate syringe pumps for 2 hours. The DMAEA.CCQ was diluted with 100 g of deionized water. The reaction vessel was then heated at 65°C for 4.5 hours. Between 1.5 to 2 hours 180 ml of deionized water was again added. After 4.5 hours the temperature was raised to 70°C for 0.5 hours. Thereafter, the resulting polymer was diluted with the remaining deionized water, cooled and stored.

**Preparation - EXAMPLE 5**

A dispersant was formed using the same technique described in Example 4 above from 80% DADMAC and 20% dimethylaminoethylacrylate benzyl chloride quaternary (DMAEA.BCQ) monomers. The following reagents were used:

| | |
|---|---|
| 227.52 g | 62% Solution of DADMAC |
| 73.68 g | 80% Solution of DMAEA.BCQ |
| 0.40 g | Versene |
| 1.42 g | V50 |
| 696.63 g | Deionized Water |
| 0.35 g | $H_2SO_4$ |

However, the water was added as needed. Table 1 below sets forth the time of deionized water addition during the semi-batch polymerization process.

TABLE 1

| SPEED OF ROTATION(rpm) | TORQUE in $10^{-5}$N·m (DYNES-CM) | TIME | $H_2O$ ADDITION |
|---|---|---|---|
| 200 | 4,0 (400) | 0 | 0 |
| 200 | 8,5 (850) | 30 min. | 0 |
| 200 | 12,0 (1200) | 45 min. | 50 g |
| 200 | 7,0 (700) | 46 min. | - |
| 200 | 16,0 (1600) | 1 hr. 10 min. | 50 g |
| 200 | 10,0 (1000) | 1 hr. 11 min. | - |
| 200 | 15,1 (1510) | 1 hr. 35 min. | 50 g |
| 200 | 12,0 (1200) | 1 hr. 36 min. | 50 g |
| 200 | 6,5 (650) | 1 hr. 37 min. | - |
| 200 | 15,0 (1500) | 1 hr. 55 min. | - |
| 200 | 16,1 (1610) | 2 hr. 12 min. | 50 g |
| 200 | 5,58 (558) | 2 hr. 13 min. | - |

**Preparation - EXAMPLE 6**

A dispersant was formed from 90% DADMAC and 10% dimethylaminoethylacrylate benzyl chloride quaternary (DMAEA.BCQ) monomers. The following reagents were used:

| | |
|---|---|
| 251.79 g | 67% Solution of DADMAC |
| 39.13 g | 80% Solution of DMAEA.BCQ |
| 0.20 g | Versene |
| 3.36 g | V50 |
| 678.00 g | Deionized Water |
| 27.52 g | NaCl |

The semi-batch procedure was as follows:

(1) A DADMAC solution was prepared by evaporating 272.10 g of of DADMAC monomer (62% actives) for 30 minutes. A solution comprising 251.79 g of a 67% solution of DADMAC and 27.52 g of NaCl was placed in a reactor.
(2) The polymerization reaction vessel was then purged with nitrogen, stirred at 200 rpm and heated to 57°C.
(3) Then 40 mg of versene were added to the reaction vessel.
(4) 39.13 g of DMAEA.BCQ were diluted with 15.87 g of deionized water, then 160 mg of versene were added, stirred and loaded into a syringe pump.
(5) 500 g of water were disposed in a funnel adjacent to the reaction vessel and nitrogen sparged continuously.
(6) 1.68 g of V50 were dissolved in 45.16 g of deionized water and loaded into another syringe pump.
(7) At 57°C, 11.7 g of the V50 solution were added to the reaction vessel, together with the dropwise addition of the DMAEA.BCQ.
(8) Additional deionized water was added from time to time as required.
(9) After 5 hours the temperature was raised to 82°C for 1 hour.
(10) Thereafter, the resulting polymer was diluted with the remaining deionized water, cooled and stored.

This example was also performed without any sodium chloride. The dispersant obtained was identical in all respects to the above dispersant which utilized sodium chloride during its formation.

**EXAMPLE 1**

A dispersion of a water soluble cationic polymer was formed from the terpolymer of 65 mole % acrylamide (AcAm), 25 mole % dimethylaminoethyl acrylate benzyl chloride quaternary (DMAEA.BCQ), and 10 mole % dimethylaminoethyl acrylate methyl chloride quaternary (DMAEA.MCQ). Initially, 40.336 g of water, 14.405 g of AcAm (48.2%), 12.678 g of DMAEA.BCQ (80%), 3.621 g of DMAEA.MCQ (80.5%), 4.930 g of a dispersant comprising a copolymer of 90 mole % DADMAC and 10 mole % DMAEA.BCQ, 16 g of ammonium sulfate, and 0.6 g of glycerin were added to a conventional latex reaction vessel. The reaction vessel was degassed for approximately 30 minutes with nitrogen at 9 ml/min. The reaction mixture was heated to approximately 50°C during the degassing and stirred at 400 rpm. After the 30 minutes of degassing at 9 ml/min., the nitrogen was reduced to 2 ml/min. and 0.4 g of a 1% solution of a V50 and 0.03 g of versene were added to the reaction vessel. Thereafter, the reaction vessel was heated for another 4 hours at 50°C to obtain the final water soluble polymer dispersion. The final product was filtered through a 100 mesh screen (aperture 0,15 mm) and <0.8 wt.% unfiltered material was removed.

The torque at Time = 0 was $5{,}08 \cdot 10^{-5}$ N·m (508 dynes.cm) at 402 rpm. The maximum torque observed during the polymerization process was $8{,}2 \cdot 10^{-5}$ N·m (820 dynes.cm) at approximately 400 rpm. The final torque was $5{,}1 \cdot 10^{-5}$ N·m (510 dynes-cm). The resulting polymer dispersion exhibited a viscosity of 257.5 mPa·s (cp).

**EXAMPLE 2**

A dispersion of a water soluble cationic polymer was formed from the copolymer of 90 mole % acrylamide (AcAm) and 10 mole % dimethylaminoethyl acrylate benzyl chloride quaternary (DMAEA.BCQ). Initially, 40.987 g of water, 20.528 g of AcAm (48.4%), 8.387 g of DMAEA.BCQ (50%), 4.712 g of AcAm/DMAEA.BCQ (90/10 mole %), 2.12 g of a dispersant comprising a copolymer of 90 mole % DADMAC and 10 mole % DMAEA.BCQ, 15.55 g of ammonium sulfate, and 0.7 g of glycerin, and 0.566 g of acetic acid were added to a conventional latex reaction vessel. The reaction vessel was degassed for approximately 30 minutes with nitrogen at 9 ml/min. The reaction mixture was heated to approximately 40°C during the degassing and stirred at 400 rpm. After the 30 minutes of degassing at 9 ml/min., the

nitrogen was reduced to 2 ml/min. and 0.566 g of a 1% solution of a VA044 and 0.03 g of versene were added to the reaction vessel. Thereafter, the reaction vessel was heated for another 4 hours at 40°C to obtain the final water soluble polymer dispersion. The reaction mixture was cooled to ambient temperature, and 6.22 g of sodium sulfate and 0.566 g of acetic acid were added.

The viscosity at Time = 0 was 16 mPa·s (cp) at 400 rpm, at 25° C. The maximum viscosity observed during the polymerization process was 2100 mPa·s (cp) at 40°C. The final viscosity was 1000 mPa·s (cp). The polymer dispersion after post-treatment exhibited a viscosity of 37.5 mPa·s (cp).

**EXAMPLE 3**

A dispersion of a water soluble cationic polymer was formed from the terpolymer of 70 mole % acrylamide (AcAm), 20 mole % dimethylaminoethyl acrylate benzyl chloride quaternary (DMAEA.BCQ), and 10 mole % dimethylaminoethyl acrylate methyl chloride quaternary (DMAEA.MCQ). Initially, 31.918 g of water, 17.229 g of AcAm (46.8%), 17.5 g of DMAEA.BCQ (50%), 3.903 g of DMAEA.MCQ (80.5%), 4.931 g of a dispersant comprising a copolymer of 90 mole % DADMAC and 10 mole % DMAEA.BCQ, 16.089 g of ammonium sulfate, and 0.6 g of glycerin were added to a conventional latex reaction vessel. The reaction vessel was degassed for approximately 30 minutes with nitrogen at 9 ml/min. The reaction mixture was heated to approximately 48°C during the degassing and stirred at 400 rpm. After the 30 minutes of degassing at 9 ml/min., the nitrogen was reduced to 2 ml/min. and 0.4 g of a 1% solution of a V50 and 0.03 g of versene were added to the reaction vessel. Thereafter, the reaction vessel was heated for another 4 hours at 48°C to obtain the final water soluble polymer dispersion. 6 g of ammonium sulfate and 1 g of acetic acid were added to this polymer dispersion.

The viscosity at Time = 0 was 12 mPa·s (cp) at 400 rpm. The maximum viscosity observed during the polymerization process was 1600 mPa·s (cp). The polymer dispersion after post-treatment exhibited a viscosity of 250 mPa·s (cp).

**EXAMPLE 4**

A dispersion of a water soluble cationic polymer was formed from the terpolymer of 65 mole % acrylamide (AcAm), 25 mole % dimethylaminoethyl acrylate benzyl chloride quaternary (DMAEA.BCQ), and 10 mole % dimethylaminoethyl acrylate methyl chloride quaternary (DMAEA.MCQ). Initially, 40.336 g of water, 14.405 g of AcAm (48.2%), 12.678 g of DMAEA.BCQ (80%), 3.621 g of DMAEA.MCQ (80.5%), 4.930 g of a dispersant comprising a copolymer of 90 mole % DADMAC and 10 mole % DMAEA.BCQ, 16 g of ammonium sulfate, 0.9 g of glycerin, and 1 g of acetic acid were added to a conventional latex reaction vessel. The reaction vessel was degassed for approximately 30 minutes with nitrogen at 9 ml/min. The reaction mixture was heated to approximately 48°C during the degassing and stirred at 400 rpm. After the 30 minutes of degassing at 9 ml/min., the nitrogen was reduced to 2 ml/min. and 0.4 g of a 1% solution of a V50 and 0.03 g of versene were added to the reaction vessel. Thereafter, the reaction vessel was heated for another 4 hours at 48°C to obtain the final water soluble polymer dispersion. Then 6 g of ammonium sulfate and 1 g of acetic acid were added to the polymer dispersion.

The Brookfield viscosity at Time = 0 was 12 mPa·s (cp). The maximum viscosity observed during the polymerization process was 1700 mPa·s (cp) (#3 spindle, at 12 rpm). The polymer dispersion after post-treatment exhibited a Brookfield viscosity of 86 mPa·s (cp) (#1 spindle at 60 rpm).

**EXAMPLE 5**

A dispersion of a water soluble cationic polymer was formed from the terpolymer of 65 mole % acrylamide (AcAm), 25 mole % dimethylaminoethyl acrylate benzyl chloride quaternary (DMAEA.BCQ), and 10 mole % dimethylaminoethyl acrylate methyl chloride quaternary (DMAEA.MCQ). Initially, 40.336 g of water, 14.405 g of AcAm (48.2%), 12.678 g of DMAEA.BCQ (80%), 3.621 g of DMAEA.MCQ (80.5%), 4.930 g of a dispersant comprising a copolymer of 90 mole % DADMAC and 10 mole % DMAEA.BCQ, 15.50 g of ammonium sulfate and 1.2 g of glycerin were added to a conventional latex reaction vessel. The reaction vessel was degassed for approximately 30 minutes with nitrogen at 9 ml/min. The reaction mixture was heated to approximately 48 °C during the degassing and stirred at 1000 rpm. After the 30 minutes of degassing at 9 ml/min., the nitrogen was reduced to 2 ml/min. and 0.4 g of a 1% solution of a V50 and 0.03 g of versene were added to the reaction vessel. Thereafter, the reaction vessel was heated for another 4 hours at 48°C to obtain the final water soluble polymer dispersion. Then 6.5 g of ammonium sulfate and 1 gram of acetic acid were added to the polymer dispersion.

The Brookfield viscosity at Time = 0 was 10 mPa·s (cp). The maximum viscosity observed during the polymerization process at approximately 1000 rpm was 3200 mPa·s (cp). The polymer dispersion after post-treatment exhibited a Brookfield viscosity of 82 mPa·s (cp)(#1 spindle at 60 rpm).

**EXAMPLE 6**

A dispersion of a water soluble cationic polymer was formed from the terpolymer of 65 mole % acrylamide (AcAm), 25 mole % dimethylaminoethyl acrylate benzyl chloride quaternary (DMAEA.BCQ), and 10 mole % dimethylaminoethyl acrylate methyl chloride quaternary (DMAEA.MCQ). Initially, 40.336 g of water, 14.405 g of AcAm (48.2%), 12.678 g of DMAEA.BCQ (80%), 3.621 g of DMAEA.MCQ (80.5%), 4.930 g of a dispersant comprising a copolymer of 90 mole % DADMAC and 10 mole % DMAEA.BCQ, 15.50 g of ammonium sulfate and 1.2 g of glycerin were added to a conventional latex reaction vessel. The reaction vessel was degassed for approximately 30 minutes with nitrogen at 9 ml/min. The reaction mixture was heated to approximately 48 °C during the degassing and stirred at 1000 rpm. After the 30 minutes of degassing at 9 ml/min., the nitrogen was reduced to 2 ml/min. and 0.13 g of a 1% solution of a V50 and 0.03 g of versene were added to the reaction vessel. Thereafter, the reaction vessel was heated for another 3 hours at 48°C and a second batch of V50 initiator (0.27 g) was added. The reaction proceeded for a further hours (total reaction time was 4 hours) to obtain the final water soluble polymer dispersion. Then 6.5 g of ammonium sulfate and 1 g of acetic acid were added to the polymer dispersion.

The Brookfield viscosity at Time = 0 was 12 mPa·s (cp). The maximum viscosity observed during the polymerization process at approximately 1000 rpm was 1600 mPa·s (cp). The polymer dispersion after post-treatment exhibited a Brookfield viscosity of 70 mPa·s (cp) (#1 spindle at 60 rpm).

**EXAMPLE 7**

The following is a comparative study of the use of conventional dispersant in the preparation of a water soluble polymer dispersion comprising 90 mole % acrylamide and 10 mole % DMAEA.BCQ in a three liter reactor. All of the samples set forth in Table 2 below yielded polymer dispersions without any significant gel formation. These dispersions also met the usual RSV/IV specifications; however, these samples proceeded through high process viscosities (i.e., 100,000 to >500,000 mPa·s (cp). Such high process viscosities require the use of custom built polymerization reaction vessels which are costly and inconvenient due to all of the conventional latex reaction vessel currently in use. The last entry in Table 2 exemplifies the efficiency of hydrophobic stabilizer in preparation of a polymer dispersion.

Table 2

| [Dispersion of AcAm/DMAEA.BCQ] | | | |
|---|---|---|---|
| **Sample No.** | **Dispersant** | **Peak Visc. (cps) mPa·s** | **RSV/IV (dL/gm)** |
| 1 | poly(DMAEA.MCQ) | >500,000 | 19.6/15.98 |
| 2 | AcAm-co-DMAEA.MCQ | >300,000 | 19.2/15.36 |
| 3 | DADMAC-co-DMAEA.BCQ | 2100 | 19.9/16.20 |

**EXAMPLE 8**

The following experiments were conducted to determine whether the dispersant used according to the present invention would reduce the process viscosity of the polymerization of a dispersion comprising a terpolymer of 65 mole % acrylamide, 25 mole % DMAEA.BCQ and 10 mole % DMAEA.MCQ.

A 1000 g batch of the aforementioned terpolymer was prepared using either a poly(DMAEA.MCQ) dispersant or a dispersant comprising 90 mole % of DADMAC and 10 mole % of DMAEA.BCQ. The results are set forth below in Table 3.

Table 3

| [AcAm/DMAEA.BCQ/DMAEA.MCQ Dispersant] | | |
|---|---|---|
| **Run No.** | **Dispersant** | **Peak Viscosity** |
| 1 | poly(DMAEA.MCQ) | >100,000 mPa·s (cp) |
| 2 | DADMAC/DMAEA.BCQ | 1,700 mPa·s (cp) |

Samples were withdrawn every 15 minutes and the Brookfield viscosity measured. The peak viscosity measured during run no. 1 using the conventional dispersant was >100,000 mPa·s (cp); whereas run no. 2 using the hydrophobic dispersant of the present invention exhibited a peak viscosity of only 1,700 mPa·s (cp). This comparison clearly indicates that the dispersant is capable of substantially reducing the process viscosity during polymerization of water soluble polymer dispersions.

**EXAMPLE 9**

The effect of hydrophobic stabilizers in reducing the process viscosities during the dispersion polymerizations was further investigated and the results are set forth below in Table 4.

Table 4

| Run# | Polymer | Stabilizer | Peak viscosities mPa·s (cp) | RSV/IV dL/gm |
|---|---|---|---|---|
| 1 | AcAm/DMAEA.BCQ (90/10) | DADMAC/DMAEA.BCQ* | 90 | 18.9/15.8 |
| 2 | AcAm/DMAEA.BCQ/ DMAEA.MCQ** | DADMAC/DMAEA.BCQ*** | 2100 | 21.6/16/2 |
| 3 | AcAm/DMAEA.BCQ/ DMAEA.MCQ**** | DADMAC/DMAEA. BCQ***** | 1600 | 19.6/15.2 |
| 4 | AcAm/DMAEA.BCQ/ DMAEA.MCQ** | DADMAC/DMAEA. BCQ****** | 50,000 | Gelled |
| 5 | AcAm/DMAEA.BCQ/ DMAEA.MCQ** | DADMAC/DMAEA.BCQ* | 700 | 21.6/15.8 |
| 6 | AcAm/DMAEA.BCQ/ DMAEA.MCQ** | DADMAC/DMAEA.BCQ* | 2100 | 20.8/15.8 |
| 7 | AcAm/DMAEA.BCQ (90/10) | DADMAC/DMAEA.BCQ* | 600 | 19.9/16.2 |
| 8 | AcAm/DMAEA.BCQ/ DMAEA.MCQ** | DADMAC/DMAEA.BCQ# | 3000 | 20.1/15.2 |
| 9 | AcAm/DMAEA.BCQ/ DMAEA.MCQ** | DADMAC/DMAEA.BCQ* | 1800 | 19.6/15.3 |
| 10 | AcAm/DMAEA.BCQ (90/10) | DADMAC/EHA## | 720 | 20.8/15.6 |

* 90 mole % DADMAC and 10 mole % DMAEA.BCQ initiated with VA044.
** 65 mole % DADMAC, 25 mole % DMAEA.BCQ and 10 mole % DMAEA.MCQ.
*** 90 mole % DADMAC and 10 mole % DMAEA.BCQ initiated with V50.
**** 70 mole % DADMAC, 20 mole % DMAEA.BCQ and 10 mole % DMAEA.MCQ.
***** 90 mole % DADMAC and 10 mole % DMAEA.BCQ initiated with V50.
****** 90 mole % DADMAC and 10 mole % DMAEA.BCQ initiated with ammonium persulfate.
\# 95 mole % DADMAC and 5 mole % DMAEA.BCQ initiated with VA044.
\## 90 mole % DADMAC and 10 mole % ethylhexyl acrylate initiated with VA044.

The initiator used in the preparation of the dispersants was found to influence their efficiency in the dispersion process. Initiators like V50 and VA044 appeared to function very efficiently in reducing the process viscosities of dispersion polymerizations; whereas initiators like ammonium persulfate appeared to cause very high viscosities and resulted in the formation of a polymer gel as shown in run no. 4.

Table 4 above also demonstrates the efficiency of a DADMAC/EHA dispersant in reducing the process viscosity during polymerization of a water soluble polymer.

**Claims**

**1.** A process for preparing a water-soluble polymer dispersion which comprises polymerizing a water-soluble mixture comprising

(a) a cationic monomer represented by general formula (I):

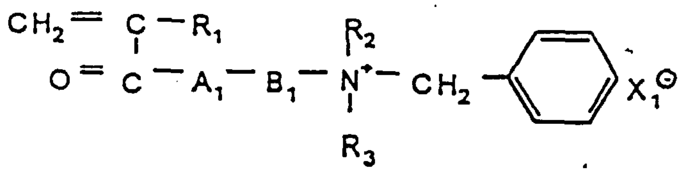

(I)

where $R_1$ is either hydrogen or $CH_3$; $R_2$ and $R_3$ are each an alkyl group having 1 to 3 carbon atoms; $A_1$ is either an oxygen atom or NH; $B_1$ is either an alkylene group having 2 to 4 carbon atoms or a hydroxypropylene group, and $X_1^{\ominus}$ is an anionic counterion, and optionally

(b) a second cationic monomer represented by general formula (II):

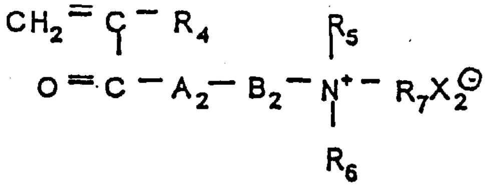

(II)

where $R_4$ is either hydrogen or $CH_3$; $R_5$ and $R_6$ are each an alkyl group having 1 to 2 carbon atoms; $R_7$ is a hydrogen atom or an alkyl group having 1 to 2 carbon atoms; $A_2$ is either an oxygen atom or NH; $B_2$ is either an alkylene group having 2 to 4 carbon atoms or a hydroxypropylene group, and $X_2^{\ominus}$ is an anionic counterion, and

(c) (meth)acrylamide
in an aqueous solution of a polyvalent anion salt, the process comprises:
conducting said polymerization in the presence of a polymerization initiator and a hydrophobically associating dispersant comprising a copolymer of diallyldimethylammonium chloride and a hydrophobic monomer selected from the group consisting of $C_6$-$C_{20}$ N-substituted quaternary dialkylaminoalkylacrylates (DMAEA), $C_6$-$C_{20}$ N-substituted quaternary dialkylaminoalkylmethacrylates (DMAEM), $C_6$-$C_{20}$ N-substituted quaternary dialkylamino-alkyl(meth)acrylamides, and alkyl esters of acrylic acid, in a molar ratio of diallyldimethylammonium chloride to hydrophobic monomer in the range between 99:1 and 20:80, wherein said cationic monomer represented by formula (I) (monomer (a) being present in an amount between 5 and 50 mole%, said cationic monomer represented by formula (II) (monomer (b)) optionally being present in an amount between 5 and 50 mole%, said (meth)acrylamide (monomer (c)) being present in an amount in the range between 20 and 95 mole%, and said hydrophobically associating dispersant being present in an amount between 2.5 and 10 weight%, based on the total weight of monomers (a), (b) and (c).

2. The process of claim 1 wherein the dispersant is a copolymer of diallyldimethylammonium chloride and a monomer selected from the group consisting of dimethylaminoethylacrylate benzyl chloride quaternary and dimethylaminoethylacrylate cetyl chloride quaternary.

3. The process of claim 1 wherein the dispersant is a copolymer of diallyldimethylammonium chloride and a monomer selected from the group consisting of dimethylaminoethylmethacrylate benzyl chloride quaternary and dimethylaminoethylmethacrylate cetyl chloride quaternary.

4. The process of any of claims 1 to 3 wherein said alkyl ester of acrylic acid is ethyl hexyl acrylate.

5. The process of any of claims 1 to 4 wherein the monomers represented by formula (I) are selected from the group consisting of the benzylchloride quaternaries of dimethylaminoethyl (meth)acrylate, diethylaminoethyl (meth)acrylate, dimethylaminopropyl (meth)acrylamide and dimethylhydroxypropyl (meth)acrylate, diethylaminopropyl (meth)acrylamide and dimethylaminohydroxypropyl (meth)acrylate.

6. The process of any of claims 1 to 5 wherein the monomers represented by formula (II) are selected from the group

consisting of the methyl and ethyl quaternary salts of dimethylaminoethyl (meth)acrylate, diethylaminoethyl (meth) acrylate, dimethylaminopropyl (meth)acrylamide, diethylaminopropyl (meth)acrylamide and dimethylhydroxypropyl (meth)acrylate.

**7.** The process of any of claims 1 to 6 wherein the process viscosity during polymerization is less than about 5,000 mPa.s (cps).

**8.** The process of any of claims 1 to 7 for preparing dispersions of cationic vinyl addition polymers in an aqueous salt solution.

**Patentansprüche**

**1.** Verfahren zur Herstellung einer wasserlöslichen Polymer-Dispersion, das umfaßt das Polymerisieren einer wasserlöslichen Mischung, enthaltend

(a) ein kationisches Monomer der allgemeinen Formel (I):

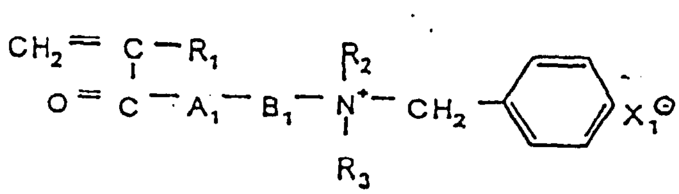

(I)

worin bedeuten:

| | |
|---|---|
| $R_1$ | entweder Wasserstoff oder $CH_3$; |
| $R_2$ und $R_3$ | jeweils eine Alkylgruppe mit 1 bis 3 Kohlenstoffatomen; |
| $A_1$ | entweder ein Sauerstoffatom oder NH; |
| $B_1$ | entweder eine Alkylengruppe mit 2 bis 4 Kohlenstoffatomen oder eine Hydroxypropylengruppe und |
| $X_1^{\ominus}$ | ein anionisches Gegenion, und gegebenenfalls |

(b) ein zweites kationisches Monomer der allgemeinen Formel (II):

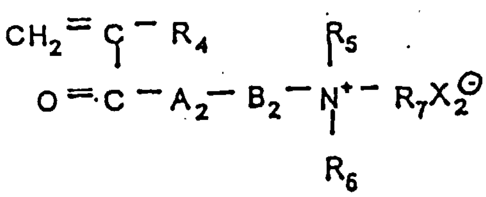

(II)

worin bedeuten:

| | |
|---|---|
| $R_4$ | entweder Wasserstoff oder $CH_3$; |
| $R_5$ und $R_6$ | jeweils eine Alkylgruppe mit 1 bis 2 Kohlenstoffatomen; |
| $R_7$ | ein Wasserstoffatom oder eine Alkylgruppe mit 1 bis 2 Kohlenstoffatomen; |
| $A_2$ | entweder ein Sauerstoffatom oder NH; |
| $B_2$ | entweder eine Alkylengruppe mit 2 bis 4 Kohlenstoffatomen oder eine Hydroxypropylengruppe und |
| $X_2^{\ominus}$ | ein anionisches Gegenion, sowie |

(c) (Meth)Acrylamid,
in einer wäßrigen Lösung eines polyvalenten Anionensalzes, wobei das Verfahren umfaßt:
die Durchführung der genannten Polymerisation in Gegenwart eines Polymerisationsinitiators und eines hydrophob assoziierenden Dispergiermittels, das umfaßt ein Copolymer von Diallyldimethylammoniumchlorid und einem hydrophoben Monomer, ausgewählt aus der Gruppe, die besteht aus $C_6$-$C_{20}$-N-substituierten quaternären Dialkylaminoalkylacrylaten (DMAEA), $C_6$-$C_{20}$-N-substituierten quaternären Dialkylaminoalkylmethacrylaten (DMAEM), $C_6$-$C_{20}$-N-substituierten quaternären Dialkylamino-alkyl(meth)acrylamiden, und Acrylsäurealkylestern, in einem Molverhältnis von Diallyldimethylammoniumchlorid zu dem hydrophoben Monomer in dem Bereich zwischen 99:1 und 20:80, wobei das genannte kationische Monomer der Formel (I) (Monomer (a)) in einer Menge zwischen 5 und 50 mol% vorliegt, das genannte kationische Monomer der Formel (II) (Monomer (b)) gegebenenfalls in einer Menge zwischen 5 und 50 mol% vorliegt, das genannte (Meth)Acrylamid (Monomer (c)) in einer Menge in dem Bereich zwischen 20 und 95 mol% vorliegt und das genannte hydrophob assoziierende Dispergiermittel in einer Menge zwischen 2,5 und 10 Gew.-%, bezogen auf das Gesamtgewicht der Monomeren (a), (b) und (c), vorliegt.

2. Verfahren nach Anspruch 1, worin das Dispergiermittel ein Copolymer- von Diallyldimethylammoniumchlorid und einem Monomer, ausgewählt aus der Gruppe, die besteht aus quaternärem Dimethylaminoethylacrylat-benzylchlorid und quaternärem Dimethylaminoethylacrylat-cetylchlorid, ist.

3. Verfahren nach Anspruch 1, worin das Dispergiermittel ein Copolymer von Diallyldimethylammoniumchlorid und einem Monomer, ausgewählt aus der Gruppe, die besteht aus quaternärem Dimethylaminoethylmethacrylat-benzyl chlorid und quaternärem Dimethylaminoethylmethacrylat-cetylchlorid, ist.

4. Verfahren nach einem der Ansprüche 1 bis 3, worin der genannte Acrylsäurealkylester Ethylhexylacrylat ist.

5. Verfahren nach einem der Ansprüche 1 bis 4, worin die Monomeren der Formel (I) ausgewählt werden aus der Gruppe, die besteht aus den quaternären Benzylchloriden von Dimethylaminoethyl(meth)acrylat, Diethylaminoethyl(meth)acrylat, Dimethylaminopropyl(meth)acrylamid und Dimethylhydroxypropyl(meth)acrylat, Diethylaminopropyl(meth)acrylamid und Dimethylaminohydroxypropyl(meth)acrylat.

6. Verfahren nach einem der Ansprüche 1 bis 5, worin die Monomeren der Formel (II) ausgewählt werden aus der Gruppe, die besteht aus den quaternären Methyl- und Ethylsalzen von Dimethylaminoethyl(meth)acrylat, Diethylaminoethyl(meth)acrylat, Dimethylaminopropyl(meth)acrylamid, Diethylaminopropyl(meth)acrylamid und Dimethylhydroxypropyl(meth)acrylat.

7. Verfahren nach einem der Ansprüche 1 bis 6, worin die Verfahrensviskosität während der Polymerisation weniger als etwa 5000 mPa.s (cps) beträgt.

8. Verfahren nach einem der Ansprüche 1 bis 7 zur Herstellung von Dispersionen von kationischen Vinyladditions-Polymeren in einer wäßrigen Salzlösung.

## Revendications

1. Procédé pour la préparation d'une dispersion de polymère soluble dans l'eau, qui comprend la polymérisation d'un mélange soluble dans l'eau, contenant

(a) un monomère cationique représenté par la formule générale (I):

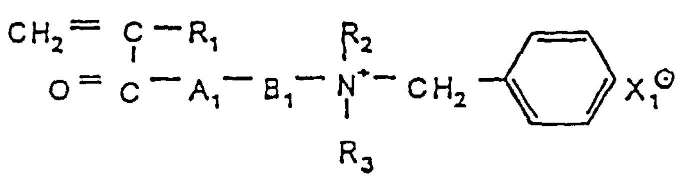

(I)

dans laquelle

$R_1$ est l'hydrogène ou $CH_3$,
$R_2$ et $R_3$ sont respectivement un groupe alkyle avec 1 à 3 atomes de carbone;

$A_1$ est un atome d'oxygène ou NH;
$B_1$ est un groupe alkylène avec 2 à 4 atomes de carbone ou un groupe hydroxypropylène, et
$X_1^{\ominus}$ est un contre-ion anionique, et éventuellement

(b) un second monomère cationique représenté par la formule générale (II):

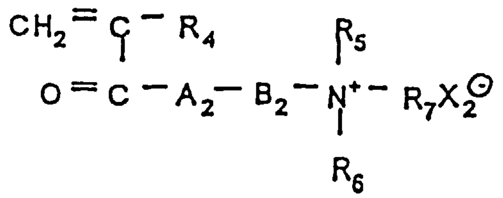

(II)

dans laquelle

$R_4$ est l'hydrogène ou $CH_3$,
$R_5$ et $R_6$ sont respectivement un groupe alkyle avec 1 à 2 atomes de carbone;
$R_7$ est un atome d'hydrogène ou un groupe alkyle avec 1 à 2 atomes de carbone;
$A_2$ est un atome d'oxygène ou NH;
$B_2$ est un groupe alkylène avec 2 à 4 atomes de carbone ou un groupe hydroxypropylène, et
$X_2^{\ominus}$ est un contre-ion anionique, et

(c) (méth)acrylamide
dans une solution aqueuse d'un sel anionique polyvalent, le procédé comprenant:
la réalisation de ladite polymérisation en présence d'un initiateur de polymérisation et d'un dispersant associant de façon hydrophobe qui comprend un copolymère de chlorure de diallyldiméthylammonium et un monomère hydrophobe, choisi du groupe comprenant des dialkylaminoalkylacrylates quaternaires $C_6$-$C_{20}$ N-substitués (DMAEA), des dialkylaminoalkylméthacrylates quaternaires $C_6$-$C_{20}$ N-substitués (DMAEM), des dialkylaminoalkyl(méth)acrylamides quaternaires $C_6$-$C_{20}$ N-substitués, et des esters alkyles d'acide acrylique, dans un rapport molaire de chlorure de diallyldiméthylammonium au monomère hydrophobe dans la gamme entre 99:1 et 20:80, ledit monomère cationique représenté par la formule (I) (monomère (a)) étant présent dans une quantité entre 5 et 50% en mole, ledit monomère cationique représenté par la formule (II) (monomère (b)) étant, le cas échéant, présent dans une quantité entre 5 et 50% en mole, ledit (méth)acrylamide (monomère (c)) étant présent dans une quantité entre 20 et 95% en mole, et ledit dispersant associant de façon hydrophobe étant présent dans une quantité entre 2,5 et 10% en poids, basé sur le poids total des monomères (a), (b) et (c).

2. Procédé selon la revendication 1, dans lequel le dispersant est un copolymère de chlorure de diallyldiméthylammonium et d'un monomère, choisi du groupe formé par le chlorure benzylique quaternaire de diméthylaminoéthylacrylate et le chlorure cetylique quaternaire de diméthylaminoéthylacrylate.

3. Procédé selon la revendication 1, dans lequel le dispersant est un copolymère de chlorure de diallyldiméthylammonium et d'un monomère, choisi du groupe formé par le chlorure benzylique quaternaire de diméthylaminoéthylméthacrylate et le chlorure cetylique quaternaire de diméthylaminoéthylméthacrylate.

4. Procédé selon l'une des revendications 1 à 3, dans lequel ledit ester alkyle de l'acide acrylique est l'éthylhexylacrylate.

5. Procédé selon l'une des revendications 1 à 4, dans lequel les monomères représentés par la formule (I) sont choisis du groupe formé par les chlorures benzyliques quaternaires de diméthylaminoéthyl(méth)acrylate, diéthylaminoéthyl(méth)acrylate, diméthylaminopropyl(méth)acrylamide et diméthylhydroxypropyl(méth)acrylate, diéthylaminopropyl(méth)acrylamide et diméthylaminohydroxypropyl(méth)acrylate.

6. Procédé selon l'une des revendications 1 à 5, dans lequel les monomères représentés par la formule (II) sont choisis du groupe formé par les sels quaternaires de méthyle et d'éthyle de diméthylaminoéthyl(méth)acrylate, diéthylaminoéthyl(méth)acrylate, diméthylaminopropyl(méth)acrylamide, diéthylaminopropyl(méth)acrylamide et diméthylhydroxypropyl(méth)acrylate.

7. Procédé selon l'une des revendications 1 à 6, dans lequel la viscosité de procédure lors de la polymérisation s'élève à moins qu'environ 5000 mPa.s (cps).

8. Procédé selon l'une des revendications 1 à 7 pour la préparation de dispersions de polymères cationiques d'addition de vinyle dans une solution aqueuse de sel.

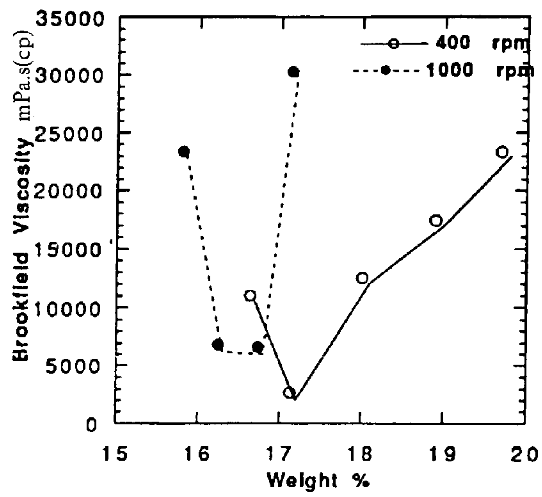


Viscosity versus Salt Concentration

Fig. 1

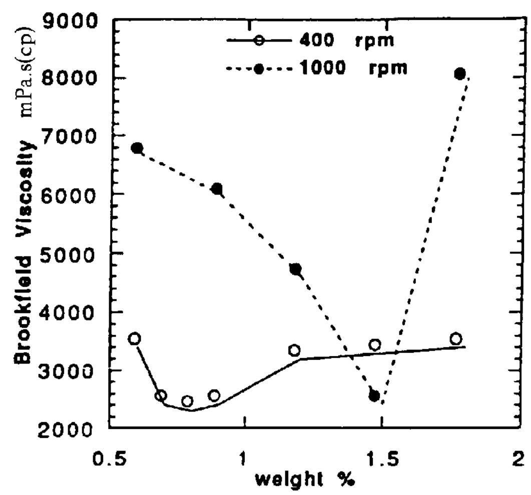


Viscosity versus Co-stabilizer Concentration

Fig. 2

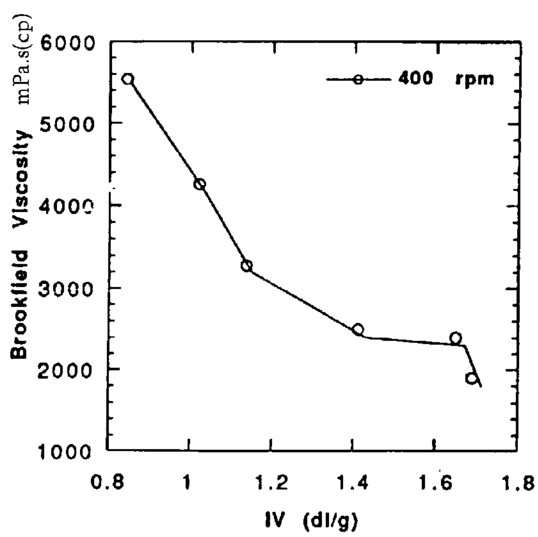


Viscosity versus Stabilizer IV

Fig. 3

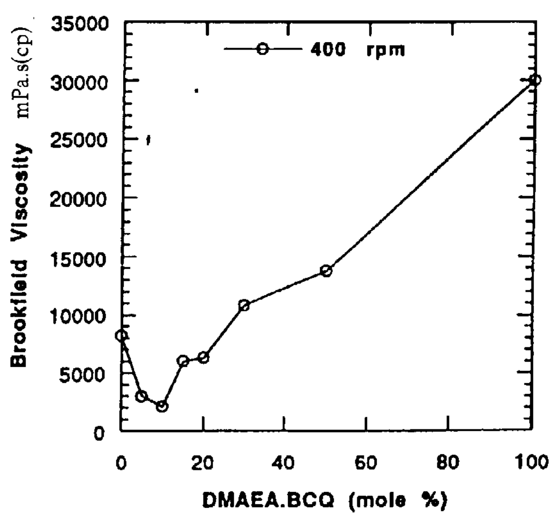


Viscosity versus Stabilizer Hydrophobicity

Fig. 4